# EUROPEAN PATENT SPECIFICATION

(11) **EP 2 913 615 B1**
(45) Date of publication and mention of the grant of the patent: **15.03.2017**
(21) Application number: 13848532.1
(22) Date of filing: 01.10.2013
(51) Int. Cl.: F01N 3/08, F01N 3/10, F01N 3/20, F01N 3/28, F01N 3/035, F01N 13/00, F24J 1/00, F28D 20/00, F28D 20/02

(54) **THERMAL STORAGE DEVICE**
WÄRMESPEICHERVORRICHTUNG
ACCUMULATEUR THERMIQUE

(30) Priority: 26.10.2012 JP 2012236943
(43) Date of publication of application: 02.09.2015
(73) Proprietor: Kabushiki Kaisha Toyota Jidoshokki, Kariya-shi, Aichi 448-8671 (JP)
(72) Inventor: HARIU Satoshi, Kariya-shi Aichi 448-8671 (JP); YAMASAKI Takafumi, Kariya-shi Aichi 448-8671 (JP); SUZUKI Junya, Kariya-shi Aichi 448-8671 (JP); YAMAUCHI Takafumi, Nagakute-shi Aichi 480-1192 (JP); HIROTA Yasuki, Nagakute-shi Aichi 480-1192 (JP); YAMANAKA Gentaro, Nagakute-shi Aichi 480-1192 (JP); SHIMAZU Takashi, Nagakute-shi Aichi 480-1192 (JP)
(74) Representative: TBK
(86) International application number: PCT/JP2013/076726
(87) International publication number: WO 2014/065086

(56) References cited:
- EP-A1- 2 884 071
- JP-A- H0 579 319
- JP-A- S5 979 025
- JP-A- H07 247 832
- JP-A- 2009 215 103
- JP-A- 2012 097 996
- JP-U- H0 283 031

## Description

The present invention relates to a thermal storage device for warming up a catalyst provided in an exhaust system of an internal combustion engine of a vehicle.

### Background Art

A vehicle has an exhaust system provided with a catalyst and the like in order to purify environmental pollutants (HC, CO, NOx, and the like) contained in an exhaust gas discharged from its engine. The catalyst has an optimal temperature (active temperature) for activating its purification performance. At the time of starting the engine, the exhaust gas has a low temperature, which takes time to reach the active temperature of the catalyst. In order for the temperature in the catalyst to rise to the active temperature in a short time when the temperature of the exhaust gas is low at the time of starting the engine and the like, a device for warming up the catalyst is necessary. As such a device, thermal storage devices utilizing the reaction heat of chemical reactions have been known. The thermal storage devices cut down fuel consumption losses and then perform warm-up. JP S59-208118 A discloses a catalyst warm-up device in which a thermal storage member is arranged on the outside of a catalyst, while the reaction heat of a chemical reaction of the thermal storage device is utilized for warming up the catalyst.

The catalyst is supported by a honeycomb base disposed within an exhaust pipe and required to be protected against shocks at the time when the vehicle is running. Therefore, when the thermal storage member is arranged on the outside of the catalyst as in JP S59-208118 A, a mat or the like is provided between the catalyst and thermal storage member in general and absorbs the shocks. When such a mat is provided between the catalyst and thermal storage member, however, heat generated in the thermal storage member is transmitted to the catalyst through the mat, which lowers the efficiency of heat transfer to the catalyst. When the mat or the like is not provided between the catalyst and thermal storage member, the heat transfer efficiency does not lower, but shocks occurring when the vehicle is running are hard to absorb.

EP 2 884 071 A1 is a prior art document according to Article 54(3) EPC and shows a thermal storage device for warming up a catalyst arranged in an exhaust system of an internal combustion engine of a vehicle. The thermal storage device comprises a reactor for generating heat by chemically reacting with ammonia; an absorber, provided with an absorbent, for storing ammonia absorbed by the absorbent; and a connection line for connecting the reactor and absorber to each other and moving ammonia between the reactor and absorber. The reactor has a thermal storage member provided so as to cover an outer peripheral portion of the catalyst, a porous sheet provided so as to cover an outer peripheral portion of the thermal storage member, and a casing for enclosing the thermal storage member and porous sheet. One end of the connection line penetrates the casing and opens to the porous sheet.

### Summary of Invention

It is thus the object of the present invention to provide an improved thermal storage device for preventing its thermal transfer efficiency from lowering and for absorbing shocks.

The object of the present invention is achieved by a thermal storage device having the features of claim 1.

Further advantageous developments of the present invention are defined in the dependent claims.

It is an advantage of the present invention to provide a thermal storage device which can prevent the thermal transfer efficiency from lowering and absorb shocks at the time when the vehicle is running.

In particular, the present invention provides a thermal storage device for warming up a catalyst arranged in an exhaust system of an internal combustion engine of a vehicle, the thermal storage device including a reactor for generating heat by chemically reacting with ammonia; an absorber, provided with an absorbent, for storing ammonia absorbed by the absorbent; and a connection line for connecting the reactor and absorber to each other and moving ammonia between the reactor and absorber; the reactor having a thermal storage member provided so as to cover an outer peripheral portion of the catalyst, a porous sheet provided so as to cover an outer peripheral portion of the thermal storage member, and a casing for enclosing the thermal storage member and porous sheet; one end of the connection line penetrating the casing and opening to the porous sheet, the porous sheet being formed from an elastically deformable material.

An exhaust system of an internal combustion engine of a vehicle is provided with a catalyst for purifying an exhaust gas and provided with a thermal storage device for warming up the catalyst. The present invention includes a reactor for generating heat by chemically reacting with ammonia and an absorber for storing ammonia absorbed by an absorbent. The reactor and absorber are connected to each other through a connection line in order to move ammonia between the reactor and absorber. The reactor has a thermal storage member and a porous sheet, which are enclosed in a casing. The thermal storage member is provided so as to cover an outer peripheral portion of the catalyst and warms up the catalyst. The porous sheet is provided so as to cover an outer peripheral portion of the thermal storage member and constitutes passages for ammonia. One end of the connection line opens to the porous sheet, so that ammonia flows into the latter from the connection line. Ammonia having flown therein is uniformly dispersed by the porous sheet, so as to be supplied to the thermal storage member. The porous sheet produces a stress buffer effect. Therefore, when the thermal storage member volume is increased by ammonia supplied thereto, the porous sheet inhibits the thermal storage member from deforming radially of the exhaust pipe. Inhibiting the thermal storage member from deforming radially of the exhaust pipe restrains the heat transfer distance from becoming longer. The porous sheet also absorbs shocks at the time when the vehicle is running and the like. As a result of these, the heat transfer efficiency of the heat generated in the thermal storage member to the catalyst can be prevented from lowering, while the shocks at the time when the vehicle is running and the like can be absorbed.

The reactor may further have a heat-insulating member enclosed in the casing and provided so as to cover an outer peripheral portion of the porous sheet.

In the reactor, the thermal storage member, porous sheet, and heat-insulating member are enclosed in the casing. The heat-insulating member is provided so as to cover an outer peripheral portion of the porous sheet and prevents heat from escaping to the outside. Therefore, the heat-insulating member absorbs shocks at the time when the vehicle is running and the like, while inhibiting the thermal storage member from deforming radially of the exhaust pipe when the thermal storage member volume is increased by ammonia supplied thereto. As a result of these, the heat transfer efficiency of the heat generated in the thermal storage member to the catalyst can further be prevented from lowering, while the shocks at the time when the vehicle is running and the like can be absorbed more.

The porous sheet may be formed from stainless steel or ceramic. In this case, the porous sheet serving as passages for ammonia is not corroded by ammonia, which enables the porous sheet to produce a stress buffer effect.

### Advantageous Effects of Invention

The present invention can provide a thermal storage device which can prevent the thermal transfer efficiency from lowering and absorb shocks at the time when the vehicle is running.

### Brief Description of Drawings

Fig. 1 is a schematic structural diagram of an exhaust purification system provided with the thermal storage device in accordance with an embodiment of the present invention; and
Fig. 2 is a sectional view of a reactor of the thermal storage device in accordance with the embodiment.

### Description of Embodiments

In the following, an embodiment of a thermal storage device in accordance with the present invention will be explained in detail with reference to the drawings. In the drawings, the same or equivalent constituents will be referred to with the same signs while omitting their overlapping descriptions.

In this embodiment, the thermal storage device in accordance with the present invention is employed in a thermal storage device implemented in an exhaust purification system provided in an exhaust system of an engine (internal combustion engine) of a vehicle. The exhaust purification system in accordance with this embodiment includes DOC (Diesel Oxidation Catalyst), SCR (Selective Catalytic Reduction), and ASC (Ammonia Slip Catalyst) as catalysts, DPF (Diesel Particulate Filter) as a filter, and a chemical thermal storage device for warming up the catalysts.

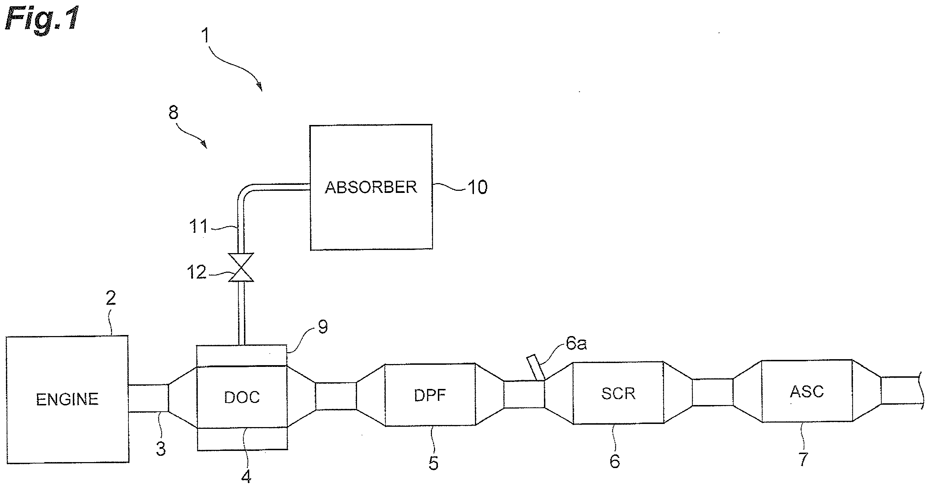

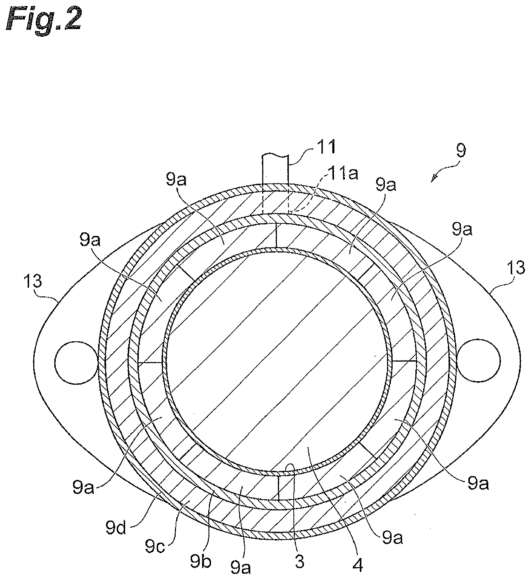

With reference to Figs. 1 and 2, an exhaust purification system 1 in accordance with this embodiment will be explained. Fig. 1 is a schematic structural diagram of the exhaust purification system provided with the thermal storage device in accordance with this embodiment. Fig. 2 is a sectional view of the reactor of the thermal storage device in accordance with this embodiment.

The exhaust purification system 1 has a diesel oxidation catalyst (DOC) 4, a diesel particulate filter (DPF) 5, a selective catalytic reduction (SCR), and an ammonia slip catalyst (ASC) 7. The DOC 4, DPF 5, SCR 6, and ASC 7 are arranged in an order of the DOC 4, the DPF 5, the SCR 6, and the ASC 7 from the upstream side to downstream side of an exhaust pipe 3 connected to the exhaust side of an engine 2.

The DOC 4 oxidizes HC, CO, and the like contained in the exhaust gas. The DPF 5 collects and removes PM (Particulate Matter) contained in the exhaust gas. The SCR 6 supplies ammonia (NH₃) or urea water to the upstream side within the exhaust pipe 3 from an injector 6a, so that NOx contained in the exhaust gas and ammonia chemically react with each other, thereby reducing and purifying NOx. Urea water is hydrolyzed into ammonia. The ASC 7 oxidizes ammonia having flowed through the SCR 6 to the downstream side thereof.

The catalysts 4, 6, 7 have respective temperature regions where they can exhibit purification performances for environmental pollutants (i.e., active temperatures). For example, the lower limit for active temperature of the DOC 4 is about 150°C. Immediately after starting the engine 2 and the like, the temperature of the exhaust gas just after being discharged from the engine 2 is relatively low, i.e., about 100°C. In order for the catalysts 4, 6, 7 to exhibit their purification performances even immediately after starting the engine 2 and the like, it is necessary for the temperatures in the catalysts 4, 6, 7 to rise promptly to their active temperatures. Therefore, the exhaust purification system 1 has a thermal storage device 8 for warming up the catalysts. The exhaust purification system 1 is provided with a temperature sensor for detecting the temperature of the exhaust gas discharged from the engine 2 (or temperatures of the catalysts).

The thermal storage device 8 is a chemical thermal storage device which warms up the catalysts without necessitating external energy such as electric power. The thermal storage device 8 usually stores the heat of the exhaust gas (exhaust heat) and, when necessary, uses the stored heat, so as to warm up the catalysts. The thermal storage device 8 warms up the DOC 4, which is a catalyst located on the upstream side in the exhaust pipe 3. The thermal storage device 8 includes a reactor 9, an absorber 10, a connection line 11, and an open-close valve 12.

The reactor 9 is provided all over the surface of an outer peripheral portion of the DOC 4. The reactor 9 has a thermal storage member (reactive member) which chemically reacts with ammonia. In the reactor 9, ammonia and the thermal storage member react with each other, thereby generating heat. Examples of the thermal storage member include metal chlorides, metal bromides, and metal iodides, specific examples of which include MgCl₂, CaCl₂, NiCl₂, ZnCl₂, and SrCl₂. The structure of the reactor 9 will be explained later in detail.

The absorber 10 incorporates therein activated carbon as an absorbent which physically absorbs ammonia. The absorber 10 stores ammonia by causing the activated carbon to physically absorb ammonia and releases ammonia by separating it from the activated carbon.

The connection line 11 connects the reactor 9 and absorber 10 to each other. The connection line 11 is a conduit for moving ammonia between the reactor 9 and absorber 10. The open-close valve 12 is arranged in the connection line 11. When the open-close valve 12 is opened, ammonia can move between the reactor 9 and absorber 10 through the connection line 11. The open-close valve 12 is opened and closed under the control of an ECU (Electronic Control Unit) (not depicted), which controls the engine 2, or the like.

With reference to Fig. 2, the structure of the reactor 9 will be explained. As mentioned above, the reactor 9 is provided so as to cover the whole surface of the outer peripheral portion of the DOC 4 through the exhaust pipe 3. That is, the reactor 9 is arranged so as to cover the outer peripheral portion of the DOC 4 as a whole indirectly through the exhaust pipe 3. The DOC 4 has a honeycomb base. The honeycomb base is arranged in the thin exhaust pipe 3 having an annular cross section. The honeycomb base supports the catalyst. The reactor 9 has a plurality of thermal storage members 9a, a porous sheet 9b, a heat-insulating member 9c, and a casing 9d. The plurality of thermal storage members 9a, porous sheet 9b, heat-insulating member 9c, and casing 9d are arranged on the outside of the DOC 4.

A pair of annular plates (not depicted) are provided orthogonal to the outer periphery of the exhaust pipe 3 on the outer periphery of the exhaust pipe in a portion where the DOC 4 is located. One annular plate is arranged about a position where the upstream end of the DOC 4 is located. The other annular plate is arranged about a position where the downstream end of the DOC 4 is located. The exhaust pipe 3 and the pair of annular plates define a space for containing the thermal storage members 9a, porous sheet 9b, and heat-insulating member 9c.

Each thermal storage member 9a is in a solid tablet form. When arranged on the outside of the exhaust pipe 3, as illustrated in Fig. 2, the plurality of thermal storage members 9a as a whole exhibit a substantially annular ring form in a cross section taken along a plane orthogonal to the outer periphery of the exhaust pipe 3. The plurality of thermal storage members 9a are arranged in a region between the pair of annular plates in the outer periphery of the exhaust pipe 3 so as to align longitudinally and circumferentially of the exhaust pipe 3. The plurality of thermal storage members 9a are in contact with the outer periphery of the exhaust pipe 3. Therefore, the plurality of thermal storage members 9a arranged in contact with the outer periphery of the exhaust pipe 3 warm up the DOC 4 through the exhaust pipe 3. Since the exhaust pipe 3 is thin, the plurality of thermal storage members 9a warm up the DOC 4 substantially directly. The plurality of thermal storage members 9a are arranged so as to cover the outer periphery of the exhaust pipe 3 directly. That is, the plurality of thermal storage members 9a are arranged so as to cover the outer peripheral portion of the DOC 4 as a whole indirectly through the exhaust pipe 3.

The volume of thermal storage members 9a increases when ammonia infiltrates therein. The plurality of thermal storage members 9a are arranged with gaps between the thermal storage members 9a adjacent to each other longitudinally of the exhaust pipe 3 so that the volume of thermal storage members 9a do not increase radially but longitudinally of the exhaust pipe 3. That is, when containing no ammonia, the thermal storage members 9a in contact with each other, whose number is the same as those longitudinally arranged between a pair of annular plates, have a total length shorter than the distance between the pair of annular plates.

The porous sheet 9b is in the form of a thin sheet. When arranged on the outside of the exhaust pipe 3, the porous sheet 9b has a substantially cylindrical form. Therefore, the porous sheet 9b as a whole exhibits a substantially annular ring form in a cross section taken along a plane orthogonal to the outer periphery of the exhaust pipe 3 as illustrated in Fig. 2. The porous sheet 9b is arranged between the pair of annular plates so as to extend along the outer peripheries of the plurality of thermal storage members 9a placed along the outer periphery of the exhaust pipe 3. The porous sheet 9b is in the form of a fine filter (net) and constitutes passages for ammonia. For constituting the passages for ammonia, it is necessary for the porous sheet 9b to be formed from a material which is not corroded by ammonia. For producing a stress buffer effect, it is also necessary for the porous sheet 9b to be formed from an elastically deformable material (flexible material). Examples of materials satisfying these conditions include stainless steel and ceramics. The porous sheet 9b is arranged so as to directly cover the outer peripheral portions of the plurality of thermal storage members 9a exhibiting a substantially cylindrical form as a whole.

The heat-insulating member 9c has a predetermined thickness. When arranged on the outside of the exhaust pipe 3, the heat-insulating member 9c has a substantially cylindrical form. Therefore, the heat-insulating member 9c exhibits a substantially annular ring form in a cross section taken along a plane orthogonal to the outer periphery of the exhaust pipe 3 as illustrated in Fig. 2. The heat-insulating member 9c is arranged between the pair of annular plates so as to extend along the outer periphery of the porous sheet 9b. The heat-insulating member 9c is relatively hard in order to inhibit the volume of thermal storage members 9a from increasing radially of the exhaust pipe 3. For producing a stress buffer effect, it is also necessary for the heat-insulating member 9c to be formed from an elastically deformable material. The heat-insulating member 9c is also porous in this embodiment. It is not necessary for the heat-insulating member 9c to be porous. The heat-insulating member 9c is arranged so as to directly cover the outer peripheral portion of the porous sheet 9b.

The casing 9d is arranged between the pair of annular plates so as to extend along the outer periphery of the heat-insulating member 9c. The casing 9d has both end portions welded to the pair of annular plates, respectively. Therefore, the space defined by the casing 9d, exhaust pipe 3, and pair of annular plates is closed and encloses therein the thermal storage members 9a, porous sheet 9b, and heat-insulating member 9c. The thermal storage members 9a are enclosed in the closed space and thus can repeatedly chemically react with ammonia. The outer periphery of the casing 9d is provided with a flange 13 for attaching the exhaust pipe and the like to a vehicle body.

The connection line 11 has one end 11a which penetrates the casing 9d and heat-insulating material 9c and opens to the outer periphery side of the porous sheet 9b. Therefore, when ammonia is released from the absorber 10 while the open-close valve 12 is open, ammonia flows into the porous sheet 9b from the one end 11a of the connection line 11.

Actions of the thermal storage device 8 (the reactor 9 in particular) in the exhaust purification system 1 will now be explained. When the vehicle is stopped (the engine 2 is stopped), the open-close valve 12 is closed. Therefore, even when separated from activated carbon in the absorber 10, ammonia is not supplied to the reactor 9 through the connection line 11.

When the temperature of the exhaust gas discharged from the engine 2 is lower than a predetermined temperature (a temperature lower than the active temperature of the DOC 4 and the like) after starting the engine 2, the open-close valve 12 is opened under the control of the ECU immediately after starting the engine 2, for example, whereby ammonia is supplied to the reactor 9 through the connection line 11. At this time, the pressure of the absorber 10 is higher than that of the reactor 9, so that ammonia moves toward the reactor 9.

In the reactor 9, ammonia flows into the porous sheet 9b from one end 11a of the connection line 11. The porous sheet 9b diffuses ammonia uniformly. The uniformly diffused ammonia is supplied equally to the plurality of thermal storage members 9a disposed on the outer periphery of the exhaust pipe 3. Each thermal storage member 9a (made of MgCl₂, for example) chemically reacts with the supplied ammonia, so as to occlude ammonia, thereby generating heat. When each thermal storage member 9a is made of MgCl₂, MgCl₂ and ammonia form a coordinate bond. That is, a reaction from the left side to right side in the following reaction formula occurs. The heat generated from each thermal storage member 9a is transmitted to the DOC 4 through the thin exhaust pipe 3. As a result, the temperature of each of the catalysts such as the DOC 4 rises to the active temperature suitable for purifying the environmental pollutants in the exhaust gas.

MgCl₂ + 6NH₃ ↔ MgCl₂·6·NH₃ + ΔH

ΔOH = 67 kJ/mol (NH₃)

In the reactor 9, the heat-insulating member 9c makes it hard for heat to escape to the outside, whereby the heat generated in each thermal storage member 9a is transmitted to the inside (the DOC 4 side). In the reactor 9, the volume of each thermal storage member 9a is increased by ammonia supplied thereto. At this time, each thermal storage member 9a is inhibited from deforming radially of the exhaust pipe 3 by the hard heat-insulating member 9c (and further by the stress buffer effect produced by the porous sheet 9b and heat-insulating member 9c), so as to deform longitudinally of the exhaust pipe 3. This restrains the heat transfer distance from each thermal storage member 9a from becoming longer. In the reactor 9, each thermal storage member 9a is arranged on the outer periphery of the thin exhaust pipe 3, thereby substantially directly warming up the DOC 4 (catalyst). As a result of these, the efficiency of heat transfer from each thermal storage member 9a to the DOC 4 (catalyst) can be prevented from lowering.

When the temperature of the exhaust gas discharged from the engine 2 is higher than a predetermined temperature (a temperature higher than the active temperature of the DOC 4 and the like), the exhaust heat of the exhaust gas is imparted to the thermal storage members 9a in the reactor 9. This separates ammonia from the thermal storage members 9a, thereby yielding high-temperature ammonia. That is, a reaction from the right side to left side in the above-mentioned reaction formula occurs. The separated ammonia returns from the reactor 9 to the absorber 10 through the connection line 11. That is, the separated ammonia passes through the porous sheet 9b from the thermal storage members 9a and then returns to the absorber 10 through the connection line 11. At this time, the pressure of the reactor 9 is higher than that of the absorber 10, so that ammonia moves toward the absorber 10. In the absorber 10, the activated carbon physically absorbs and stores ammonia.

When a vehicle is running, shocks caused by the running vehicle are absorbed by the stress buffer effect produced by the porous sheet 9b and heat-insulating member 9c. Therefore, the DOC 4 and thermal storage members 9a can be protected against the shocks caused by the running vehicle. In particular, when vehicles collide, large shocks caused by the collision are absorbed by the stress buffer effect produced by the porous sheet 9b and heat-insulating member 9c, whereby the DOC 4 and the like can be prevented from being damaged.

In the thermal storage device 8 (the reactor 9 in particular) of the exhaust purification system 1, the thermal storage members 9a are disposed on the outer peripheral portion of the DOC 4 (the outer periphery of the thin exhaust pipe 3), while the porous sheet 9b is provided all over the outer periphery of the thermal storage members 9a. This can prevent the heat transfer efficiency of the heat generated in the thermal storage members 9a to the DOC 4 (catalyst) from lowering and absorb shocks at the time when the vehicle is running and the like. As a result, the efficiency of heating by the thermal storage device 8 does not lower, so that heat loss can be suppressed, whereby the temperature of the DOC 4 and the like rapidly reaches the active temperature.

In the thermal storage device 8, the heat-insulating member 9c is provided all over the outer periphery of the porous sheet 9b. This can further prevent the heat transfer efficiency of the heat generated in the thermal storage members 9a to the DOC 4 from lowering and absorb shocks more at the time when the vehicle is running and the like. In particular, since the heat-insulating member 9c is hard, the volume of thermal storage members 9a increased by ammonia supplied thereto can be inhibited from deforming radially of the exhaust pipe 3, whereby the heat transfer distance can be prevented from becoming longer.

In the thermal storage device 8, the porous sheet 9b is formed from stainless steel or ceramic. Therefore, the porous sheet 9b serving as passages for ammonia is not corroded by ammonia, which enables the porous sheet 9b to produce a stress buffer effect.

While an embodiment in accordance with the present invention is explained in the foregoing, the present invention can be carried out in various modes without being restricted to the above-mentioned embodiment.

For example, while the present invention is employed in an exhaust purification system including the DOC, SCR, and ASC as catalysts and further the DPF as a filter in this embodiment, its applicable exhaust purification systems are not limited thereto. The present invention is also employable in other exhaust purification systems having various structures as long as they include at least a catalyst and a thermal storage device for warming up the catalyst. The engine is not limited to diesel engines, but may be any of gasoline engines and the like.

While the DOC 4 is a catalyst to warm up and is arranged with the reactor 9 of the thermal storage device 8 in this embodiment, the reactor 9 may be placed at other locations according to catalysts to warm up. When the catalyst to warm up is the SCR 6, for example, the SCR 6 may be arranged with the reactor 9. In this case, the reactor 9 is provided so as to cover an outer peripheral portion of the SCR 6.

The material for the porous sheet 9b is stainless steel or ceramic in this embodiment but is not limited thereto. The porous sheet 9b may also be made of any of materials other than stainless steel and ceramics as long as they are elastically deformable without being corroded by ammonia.

While the thermal storage device 8 is provided with the heat-insulating member 9c in this embodiment, it is not necessary for the thermal storage device 8 to be provided with the heat-insulating member 9c as in this embodiment. When not provided with the heat-insulating member 9c, the thermal storage device 8 may include porous sheets arranged in two layers on inner and outer sides. In this case, the inner and outer porous sheets may be soft and hard in order to produce a stress buffer effect and a deformation suppression effect, respectively.

The reactor 9 (the thermal storage members 9a, porous sheet 9b, and heat-insulating member 9c) is arranged so as to cover the outer peripheral portion of the catalyst (DOC 4) as a whole in this embodiment, but is not restricted thereto. The reactor 9 may also be arranged so as to cover a portion of the outer peripheral portion of the catalyst.

### Industrial Applicability

The present invention can be utilized in a thermal storage device for warming up catalysts provided in exhaust systems of internal combustion engines (e.g., diesel engines).

### Reference Signs List

1: exhaust purification system; 2: engine; 3: exhaust pipe; 4: diesel oxidation catalyst (DOC); 5: diesel particulate filter (DPF); 6: selective catalytic reduction (SCR); 6a: injector; 7: ammonia slip catalyst (ASC); 8: thermal storage device; 9: reactor; 9a: thermal storage member; 9b: porous sheet; 9c: heat-insulating member; 9d: casing; 10: absorber; 11: connection line; 12: open-close valve; 13: flange.

## Claims

1. A thermal storage device (8) for warming up a catalyst (4, 6, 7) arranged in an exhaust system of an internal combustion engine (2) of a vehicle, the thermal storage device (8) comprising:
a reactor (9) for generating heat by chemically reacting with ammonia;
an absorber (10), provided with an absorbent, for storing ammonia absorbed by the absorbent; and
a connection line (11) for connecting the reactor (9) and absorber (10) to each other and moving ammonia between the reactor (9) and absorber (10);
wherein the reactor (9) has a thermal storage member (9a) provided so as to cover an outer peripheral portion of the catalyst (4, 6, 7), a porous sheet (9b) provided so as to cover an outer peripheral portion of the thermal storage member (9a), and a casing (9d) for enclosing the thermal storage member (9a) and porous sheet (9b);
wherein one end (11a) of the connection line (11) penetrates the casing (9d) and opens to the porous sheet (9b); and
wherein the porous sheet (9b) is formed from an elastically deformable material.

2. The thermal storage device (8) according to claim 1, wherein the reactor (9) further has a heat-insulating member (9c) enclosed in the casing (9d) and provided so as to cover an outer peripheral portion of the porous sheet (9b).

3. The thermal storage device (8) according to claim 1 or 2, wherein the porous sheet (9b) is formed from stainless steel or ceramic.

## Patentansprüche

1. Wärmespeichervorrichtung (8) zum Erwärmen eines Katalysators (4, 6, 7), der in einem Abgassystem einer Brennkraftmaschine (2) eines Fahrzeugs angeordnet ist, wobei die Wärmespeichervorrichtung (8) Folgendes aufweist:
einen Reaktor (9) zum Erzeugen von Wärme durch eine chemische Reaktion mit Ammoniak;
einen mit einem Absorptionsmittel vorgesehenen Absorber (10) zum Speichern von Ammoniak, das durch das Absorptionsmittel absorbiert wird; und
eine Verbindungsleitung (11) zum Miteinanderverbinden des Reaktors (9) und des Absorbers (10) und zum Bewegen von Ammoniak zwischen dem Reaktor (9) und dem Absorber (10);
wobei der Reaktor (9) ein Wärmespeicherbauteil (9a), das vorgesehen ist, um einen Außenumfangsabschnitt des Katalysators (4, 6, 7) abzudecken, eine poröse Platte (9b), die vorgesehen ist, um einen Außenumfangsabschnitt des Wärmespeicherbauteils (9a) abzudecken, und ein Gehäuse (9d) zum Umschließen des Wärmespeicherbauteils (9a) und der porösen Platte (9b) hat;
wobei ein Ende (11a) der Verbindungsleitung (11) das Gehäuse (9d) durchdringt und zu der porösen Platte (9b) offen ist; und
wobei die poröse Platte (9b) aus einem elastisch verformbaren Material ausgebildet ist.

2. Wärmespeichervorrichtung (8) nach Anspruch 1, wobei der Reaktor (9) des Weiteren ein wärmeisolierendes Bauteil (9c) hat, das in dem Gehäuse (9d) umschlossen ist und vorgesehen ist, um einen Außenumfangsabschnitt der porösen Platte (9b) abzudecken.

3. Wärmespeichervorrichtung (8) nach Anspruch 1 oder 2, wobei die poröse Platte (9b) aus rostfreiem Stahl oder Keramik ausgebildet ist.

## Revendications

1. Accumulateur thermique (8) pour chauffer un catalyseur (4, 6, 7) agencé dans un système d'échappement d'un moteur à combustion interne (2) d'un véhicule, l'accumulateur thermique (8) comprenant :
un réacteur (9) pour générer de la chaleur en réagissant chimiquement avec de l'ammoniac ;
un absorbeur (10), prévu avec un absorbant, pour stocker l'ammoniac absorbé par l'absorbant ; et
une ligne de raccordement (11) pour raccorder le réacteur (9) et l'absorbeur (10) entre eux et déplacer l'ammoniac entre le réacteur (9) et l'absorbeur (10) ;
dans lequel le réacteur (9) a un élément d'accumulateur thermique (9a) prévu afin de couvrir une partie périphérique externe du catalyseur (4, 6, 7), une feuille poreuse (9b) prévue afin de couvrir une partie périphérique externe de l'élément d'accumulateur thermique (9a), et un boîtier (9d) pour fermer l'élément d'accumulateur thermique (9a) et la feuille poreuse (9b) ;
dans lequel une extrémité (11a) de la conduite de raccordement (11) pénètre dans le boîtier (9d) et s'ouvre sur la feuille poreuse (9b) ; et
dans lequel la feuille poreuse (9b) est formée à partir d'un matériau élastiquement déformable.

2. Accumulateur thermique (8) selon la revendication 1, dans lequel le réacteur (9) a en outre un élément thermiquement isolant (9c) enfermé dans le boîtier (9d) et prévu afin de recouvrir une partie périphérique externe de la feuille poreuse (9b).

3. Accumulateur thermique (8) selon la revendication 1 ou 2, dans lequel la feuille poreuse (9b) est formée à partir d'acier inoxydable ou de céramique.
